(19) Europäisches Patentamt / European Patent Office / Office européen des brevets

(11) **EP 1 774 061 B1**

(12) **FASCICULE DE BREVET EUROPEEN**

(45) Date de publication et mention de la délivrance du brevet:
**03.05.2017 Bulletin 2017/18**

(21) Numéro de dépôt: **05778865.5**

(22) Date de dépôt: **21.06.2005**

(51) Int Cl.:
*C25B 1/04* (2006.01)   *H01M 4/90* (2006.01)
*C25B 11/04* (2006.01)

(86) Numéro de dépôt international:
**PCT/FR2005/001556**

(87) Numéro de publication internationale:
**WO 2006/008390 (26.01.2006 Gazette 2006/04)**

(54) **PROCEDE ET DISPOSITIF D'ELECTROLYSE DE L'EAU COMPRENANT UN MATERIAU OXYDE D'ELECTRODE PARTICULIER**

VERFAHREN UND VORRICHTUNG ZUR WASSERELEKTROLYSE MIT EINEM SPEZIELLEN OXIDELEKTRODENMATERIAL

METHOD AND DEVICE FOR WATER ELECTROLYSIS COMPRISING A SPECIAL OXIDE ELECTRODE MATERIAL

(84) Etats contractants désignés:
**DE ES FR GB IT**

(30) Priorité: **23.06.2004 FR 0406839**

(43) Date de publication de la demande:
**18.04.2007 Bulletin 2007/16**

(73) Titulaire: **Electricité de France**
**75008 Paris (FR)**

(72) Inventeurs:
• **STEVENS Philippe**
  **76139 Karlsruhe (DE)**
• **LALANE Cécile**
  **F-40180 Rivière (FR)**
• **BASSAT Jean-Marc**
  **F-33610 Cestas (FR)**
• **MAUVY Fabrice**
  **F-33610 Canejan (FR)**
• **GRENIER Jean-Claude**
  **F-33140 Cadaujac (FR)**

(74) Mandataire: **Cabinet Plasseraud**
**66 rue de la Chaussée d'Antin**
**75440 Paris Cedex 09 (FR)**

(56) Documents cités:
**DE-A- 10 208 882   FR-A1- 2 695 570**
**US-B1- 6 503 296**

• **DATABASE CA [Online] CHEMICAL ABSTRACTS SERVICE, COLUMBUS, OHIO, US; 5 février 1996 (1996-02-05), MYAMOTO, HITOSHI ET AL: "Nickel oxide-based fuel electrodes for electromechanical cells" XP002309429 Database accession no. 124:61615 & JP 07 249412 A (MITSUBISHI HEAVY INDUSTRIES, LTD., JAPAN) 26 septembre 1995 (1995-09-26)**
• **DATABASE CA [Online] CHEMICAL ABSTRACTS SERVICE, COLUMBUS, OHIO, US; 27 novembre 1995 (1995-11-27), CHIBA, REIICHI ET AL: "Air cathode materials for solid fuel cells for low-temperature operation" XP002309430 Database accession no. 123:291801 & JP 07 161360 A (NIPPON TELEGRAPH & TELEPHONE, JAPAN) 23 juin 1995 (1995-06-23)**

**Description**

L'invention concerne un procédé d'électrolyse de l'eau comportant l'utilisation d'une électrode comprenant au moins un matériau oxyde particulier, particulièrement à haute température. L'invention concerne aussi un dispositif de mise en oeuvre d'un tel procédé pour l'électrolyse de l'eau.

L'utilisation future de l'hydrogène comme vecteur énergétique impose le développement d'un procédé qui assure une production massive à faible coût. L'électrolyse de l'eau permet de produire de l'hydrogène à partir de l'eau en utilisant de l'énergie électrique pour la décomposition de l'eau. La réaction électrochimique mise en jeu est inverse au principe de la pile à combustible. Le procédé d'électrolyse de l'eau utilisé aujourd'hui industriellement l'est depuis plusieurs décennies. Il fonctionne à une température de l'ordre de 80 à 120°C, et les rendements électriques dudit procédé sont de l'ordre de 45 à 65%. Ce rendement de conversion d'énergie est trop faible pour que cette technique puisse être utilisée pour la production d'hydrogène en tant que vecteur énergétique.

La faible température de fonctionnement est en partie responsable du faible rendement de conversion d'énergie. Un procédé fonctionnant à haute température (soit généralement à une température supérieure ou égale à 600°C) a un meilleur rendement électrique car les réactions aux électrodes sont facilitées et parce que de l'énergie thermique peut également être utilisée dans le procédé de conversion électrochimique. Parmi les différentes techniques de production de l'hydrogène par électrolyse de l'eau à haute température (décrites par exemple dans l'article de E. SCHOULER, E. FERNANDEZ et H. BERNARD, « Electrolyse de la vapeur d'eau à haute température », RGE, mars 1982,) aucune n'est arrivée en phase industrielle, principalement pour une raison de coût prohibitif, ainsi qu'il est explicité ci-après.

En effet, le coeur de la cellule électrochimique se compose d'une anode ou électrode positive, d'une cathode ou électrode négative, et d'un électrolyte qui est solide et à base de céramique. Les ions d'oxygène circulent à travers l'électrolyte de la cathode vers l'anode. L'électrolyte solide le plus communément utilisé est la zircone stabilisée à l'yttrium ou YSZ (acronyme de « Yttria Stabilized Zirconia » en anglais) appelée aussi zircone yttriée. La cathode, qui est le siège de la réduction de l'eau pour produire de l'hydrogène et des anions $O^{2-}$ qui vont circuler à travers l'électrolyte, est le plus couramment un cermet (céramique métallique) du type nickel dispersé dans de la zircone stabilisée (YSZ), éventuellement dopé avec du ruthénium Ru. L'anode qui libère les charges et qui est le siège de l'oxydation des ions $O^{2-}$ en oxygène, est le plus couramment à base d'oxydes à conduction mixte tels que $In_2O_3$ dopé à $SnO_2$ et le manganite de lanthane $LaMnO_3$ dopé au calcium ou au strontium tel que décrit, par exemple, dans la demande de brevet FR 2 695 570. La production d'hydrogène nécessitant le couplage en batterie de nombreuses cellules élémentaires, la réalisation d'interconnexions qui permettent de relier électriquement deux cellules contiguës tout en assurant l'étanchéité entre deux compartiments anodique et cathodique, est généralement effectuée en matériau spécifique généralement connu de l'homme du métier, par exemple en matériau de type cermet Cr - -MgO - $Al_2O_3$. recouvert de platine du côté oxygène (anodique) et de nickel du côté hydrogène (cathodique). Enfin la géométrie de telles batteries est généralement de type tubulaire ou plane, de préférence tubulaire.

Le seul procédé à haute température expérimenté à ce jour (le procédé dit « Hot Elly », appelé procédé Dornier System dans l'article précité) concerne un électrolyseur qui fonctionne à 1000°C. Un tel électrolyseur est de géométrie tubulaire et utilise de petits tubes cylindriques concentriques principalement en zircone. Les électrodes (cermet de nickel - zircone yttriée pour la cathode et manganite de lanthane pour l'anode) sont déposées par projection. Mais les matériaux et le procédé de fabrication utilisé sont trop onéreux pour qu'une application commerciale puisse être raisonnablement envisagée.

C'est pour résoudre ces problèmes de l'art antérieur qu'un autre type de matériau oxyde devait être utilisé en tant qu'électrode d'au moins une cellule électrochimique d'électrolyse de l'eau. C'est ce que réalise le procédé selon l'invention.

Le procédé selon l'invention est un procédé d'électrolyse de l'eau comportant l'utilisation d'une électrode comprenant au moins un matériau oxyde de formule générale suivante :

$$(1) \qquad A_{2-x-y}A'_xA''_yM_{1-z}M'_zO_{4+\delta},$$

où :

A est un cation métallique appartenant au groupe formé par les lanthanides et/ou les alcalins et/ou les alcalino-terreux,
A' est au moins un cation métallique appartenant au groupe formé par les lanthanides et/ou les alcalins et/ou les alcalino-terreux,
A'' est une lacune cationique, c'est-à-dire une vacance de cations A et/ou A',
M est un métal appartenant au groupe formé par les métaux des éléments de transition,
M' est au moins un métal appartenant au groupe formé par les métaux des éléments de transition,

ledit matériau étant tel que

$$0 \leq y < 0,30, \text{ de préférence } 0 \leq y \leq 0,20 \text{ ;}$$

$$0 < \delta < 0,25, \text{ de préférence } 0 < \delta < 0,10$$

$$0 \leq x \leq 1 \text{ ;}$$

et

$$0 \leq z \leq 1.$$

La formule précédente englobe donc le cas où x est égal à 0, c'est-à-dire le cas de la présence d'un seul cation métallique, et aussi, indépendamment ou non du cas précédent, le cas où z est égal à 0 ou à 1, c'est-à-dire le cas de la présence d'un seul métal.

A' peut représenter plusieurs cations métalliques, et M' peut aussi, indépendamment, représenter plusieurs métaux ; l'homme du métier sait réécrire la formule (1) en fonction du nombre de composants.

La formule précédente englobe donc le cas où y est égal à 0, c'est-à-dire le cas de l'absence de lacune cationique.

Par ailleurs, la présence d'un coefficient $\delta$ de sur-stoechiometrie en oxygène, de valeur différente de 0, contribue à la conductivité ionique du matériau.

Selon un mode de réalisation particulièrement préféré de l'invention, M et M' sont de valence mixte, c'est-à-dire qu'avantageusement de tels métaux contribuent à la conductivité électronique du matériau.

Avantageusement, de tels matériaux selon l'invention présentent une bonne stabilité thermique en composition. Ceci a été montré par mesure ATG (analyse thermogravimétrique sous air), et vérifié par diffraction des rayons X en température, sur deux matériaux qui sont $Nd_{1,95}NiO_{4+\delta}$ et $Nd_{1,90}NiO_{4+\delta}$. En effet, la mesure du coefficient $\delta$ de sur ou sous stoechiométrie en oxygène en fonction de la température, sur une plage allant de la température ambiante, soit environ 20°C, à 1000°C, ne montre pas d'accident et vérifie que la perte de masse est directement et uniquement proportionnelle à la variation de la teneur en oxygène du matériau.

De façon avantageuse, lorsque selon un mode de réalisation de l'invention y est différent de 0, les lacunes A" sont réparties en distribution statistique. En effet, des clichés de diffraction électronique obtenus par microscopie électronique à transmission du matériau qu'est $Nd_{1,90}NiO_{4+\delta}$ ne permettent de relever aucun allongement ou traînée des principales taches (0,0,1), ce qui révèle un ordre parfait selon l'axe c et l'absence d'intercroissances de type Ruddlesden-Popper au sein des empilements $A_2MO_{4+\delta}$, confirmant ainsi une telle distribution statistique des lacunes de néodyme.

Par lanthanide, on entend selon l'invention le lanthane La ou un élément du groupe des lanthanides tel que Ce, Pr, Nd, Pm, Sm, Eu, Gd, Tb, Dy, Ho, Er, Tm, Yb ou Lu et Y. Par alcalin, on entend selon l'invention un élément hors l'hydrogène du groupe 1 (version IUPAC) de la classification périodique des éléments. Par alcalino-terreux, on entend selon l'invention un élément du groupe 2 (version IUPAC) de la classification périodique des éléments. Par métal de transition, on entend selon l'invention un élément des groupes 3 à 12 (version IUPAC) de la classification périodique des éléments, dont bien sûr les éléments de la période 4 tel que le titane Ti ou le Gallium Ga, les éléments de la période 5 tel que le zirconium Zr ou l'Etain Sn, et les éléments de la période 6 tel que le Tantale Ta ou le Mercure Hg. De préférence selon l'invention le métal de transition est un élément de la période 4.

Lorsque y est différent de 0, le matériau du procédé selon l'invention se caractérise avantageusement par des mesures très fines de rapport (s) (A et/ou A') / (M et/ou M') par microsonde de Castaing (ou EPMA acronyme de « Electron Probe Micro Analysis »), qui permettent d'établir la composition exacte du matériau et de mettre éventuellement en valeur la structure lacunaire en cation dudit matériau.

Dans un mode de réalisation préféré de l'invention, ledit procédé est tel que :

A et A' sont indépendamment choisis dans le groupe formé par le lanthane La, le praséodyme Pr, le strontium Sr, le calcium Ca, et le néodyme Nd, de façon préférée le néodyme Nd, le strontium Sr et le calcium Ca, de façon encore plus préférée le néodyme Nd, et tel que :

M et M' sont indépendamment choisis dans le groupe formé par le chrome Cr, le manganèse Mn, le fer Fe, le cobalt Co, le nickel Ni et le cuivre Cu, de préférence le nickel Ni et le cuivre Cu, de façon encore plus préférée le nickel Ni.

Dans les cas particuliers selon l'invention où x n'est pas égal à 0, et z n'est pas égal à 0 ou à 1, le nombre de cations de type A est d'au moins deux : A et A' , et le nombre de cations de type M est d'au moins deux : M et M'.

Dans un tel cas, et de façon plus générale, de préférence:

A est choisi dans le groupe formé par le lanthane La, le praséodyme Pr et le néodyme Nd, de façon préférée le néodyme Nd,

A' est choisi dans le groupe formé par le strontium Sr et le calcium Ca, de façon préférée le calcium Ca,

M est choisi dans le groupe formé par le chrome Cr, le manganèse Mn, le fer Fe, le cobalt Co, le nickel Ni et le cuivre Cu, de préférence le nickel Ni, et

M' est choisi dans le groupe formé par le manganèse Mn, le fer Fe, le cuivre Cu ou le cobalt Co, de préférence le cuivre Cu ou le manganèse Mn.

Dans un mode de réalisation particulièrement préféré selon l'invention, le matériau a une structure cristallographique de type $K_2NiF_4$, comme représenté par exemple dans "Inorganic Crystal Structures", p 30, de B.G. Hyde et S. Anderson, Wiley Interscience Publication (1988). La structure est ainsi formée de couches d'octaèdres oxygénés $MO_6$ déplacées les unes par rapport aux autres de ½ ½ ½, des atomes A assurant la cohésion entre les couches. Lorsque des oxygènes additionnels Oi sont présents, ils peuvent s'insérer entre ces couches dans des sites interstitiels vacants.

Dans un mode de réalisation préféré, le matériau du procédé selon l'invention possède un coefficient d'échange de surface de l'oxygène, k, supérieur à $1.10^{-8}$ cm.s$^{-1}$ à 500 °C et à $2.10^{-6}$ cm.s$^{-1}$ à 900 °C pour l'oxygène. La variation dudit coefficient suit une loi d'Arrhénius, ce qui rend aisé le calcul de ce coefficient pour une autre température de la plage de températures qui intéresse l'invention.

Dans un mode de réalisation préféré, indépendamment ou non du mode de réalisation précédent, le matériau du procédé selon l'invention possède une conductivité électronique $\sigma_e$ au moins égale à 70 S.cm$^{-1}$, de préférence au moins égale à 80 S.cm$^{-1}$, de façon encore plus préférée supérieure à 90 S.cm$^{-1}$, à 700°C.

Dans un mode de réalisation préféré, indépendamment ou non du mode de réalisation précédent, le matériau du procédé selon l'invention possède un coefficient de diffusion d'oxygène supérieur à $1.10^{-9}$ cm$^2$.s$^{-1}$ à 500 °C et $1.10^{-7}$ cm$^2$.s$^{-1}$ à 900 °C. La variation dudit coefficient suit une loi d'Arrhénius, ce qui rend aisé le calcul de ce coefficient pour une autre température de la plage de températures qui intéresse l'invention.

Dans un mode de réalisation préféré, le matériau du procédé selon l'invention possède un coefficient d'échange de surface de l'oxygène, k, supérieur à $1.10^{-8}$ cm.s$^{-1}$ à 500 °C et à $2.10^{-6}$ cm.s$^{-1}$ à 900 °C pour l'oxygène, une conductivité électronique $\sigma_e$ au moins égale à 70 S.cm$^{-1}$, de préférence au moins égale à 80 S.cm$^{-1}$, de façon encore plus préférée supérieure à 90 S.cm$^{-1}$, à 700°C, et un coefficient de diffusion d'oxygène supérieur à $1.10^{-9}$ cm$^2$.s$^{-1}$ à 500 °C et $1.10^{-7}$ cm$^2$.s$^{-1}$ à 900 °C.

De préférence, le procédé selon l'invention est mis en oeuvre à une température supérieure ou égale à 600°C.

L'invention concerne aussi un dispositif de mise en oeuvre du procédé selon l'invention.

L'invention concerne ainsi un dispositif de type électrolyseur de l'eau comprenant au moins une cellule électrochimique comprenant un électrolyte solide, une cathode, et une anode qui comprend au moins un matériau oxyde de formule générale suivante :

$$(1) \qquad A_{2-x-y}A'_xA''_yM_{1-z}M'_zO_{4+\delta},$$

où :

A est un cation métallique appartenant au groupe formé par les lanthanides et/ou les alcalins et/ou les alcalino-terreux,

A' est au moins un cation métallique appartenant au groupe formé par les lanthanides et/ou les alcalins et/ou les alcalino-terreux,

A'' est une lacune cationique, c'est-à-dire une vacance de cations A et/ou A',

M est un métal appartenant au groupe formé par les métaux des éléments de transition,

M' est au moins un métal appartenant au groupe formé par les métaux des éléments de transition,

ledit matériau étant tel que

```
0≤y<0,30, de préférence 0≤y≤0,20 ;
```

$$0<\delta<0{,}25, \text{ de préférence } 0<\delta<0{,}10$$

$$0 \leq x \leq 1 \ ;$$

et

$$0 \leq z \leq 1.$$

Ledit dispositif comprend aussi le plus souvent au moins un interconnecteur entre deux cellules d'électrolyse. En dehors de l'anode, toutes les autres pièces dudit dispositif sont généralement des éléments connus de l'homme du métier.

Avantageusement, le dispositif selon l'invention permet avec l'utilisation de l'anode selon l'invention avec à la fois une bonne conductivité électronique et une bonne conductivité ionique car $\delta$ est différent de 0, ainsi qu'une bonne stabilité thermique, et un rendement suffisant au point de vue industriel.

L'invention sera mieux comprise et d'autres caractéristiques et avantages apparaîtront à la lecture de la description qui va suivre, donnée à titre non limitatif, par référence aux figures 1 à 3.

La figure 1 est un graphe montrant, pour les quatre matériaux utilisés selon l'invention, le coefficient de diffusion d'oxygène D* (cm$^2$.s$^{-1}$) en fonction de 1000/T (K$^{-1}$), où T est la température.

La figure 2 est un graphe montrant, pour les quatre matériaux utilisés selon l'invention, le coefficient d'échange de surface de l'oxygène, k (cm.s$^{-1}$) en fonction de 1000/T (K$^{-1}$), où T est la température.

La figure 3 est un schéma de principe de l'électrolyse de l'eau, tel que respecté par le procédé et le dispositif selon l'invention.

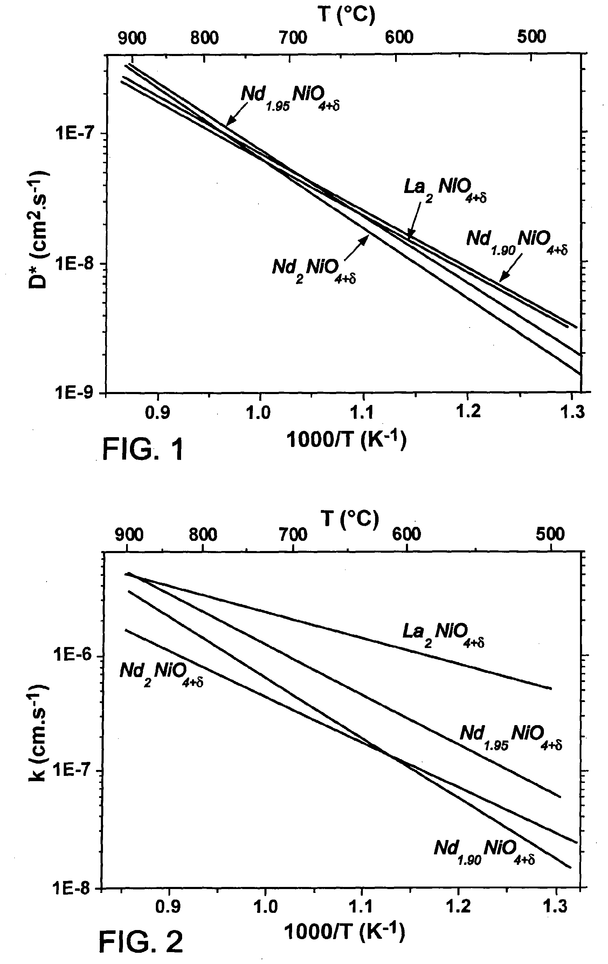

Les figures 1 et 2 sont commentées ci-après dans les exemples.

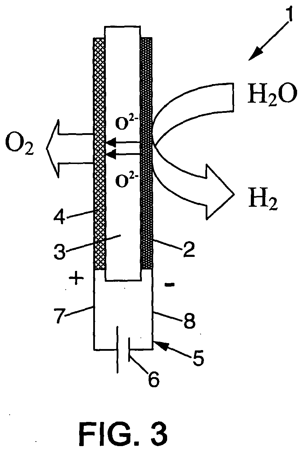

La figure 3 est un schéma de principe de l'électrolyse de l'eau, tel que respecté par le procédé et le dispositif selon l'invention. On y distingue un dispositif 1 qui est une cellule électrochimique d'électrolyse de l'eau, constituée d'une anode 4, d'une cathode 2 et d'un électrolyte 3. Un raccordement électrique est assuré par un dispositif 5 constitué d'un générateur 6 et de deux fils de connexion électrique 7 et 8.

## EXEMPLES

Les exemples qui suivent illustrent l'invention sans pour autant en limiter la portée.

Deux matériaux ont été synthétisés : $Nd_{1,95}NiO_{4+\delta}$ et $Nd_{1,90}NiO_{4+\delta}$, ayant respectivement une valeur de y égale à 0,05 et 0,10. Ces matériaux sont synthétisés indifféremment par réaction à l'état solide des oxydes $Nd_2O_3$ et NiO à 1100 °C ou par des voies de chimie douce ou de sol-gel à partir par exemple de la décomposition des nitrates de néodyme et nickel en solution avec recuit final à 1100°C. Leur valeur de sur-stoechiométrie en oxygène est égale respectivement à $\delta$ = 0,15 et à $\delta$ = 0,06, déterminée par analyse chimique du Ni$^{3+}$ (iodométrie).

On mesure à 700°C leur conductivité électronique $\sigma_e$ égale respectivement à 100 S.cm$^{-1}$ et 80 S.cm$^{-1}$. Leur coefficient d'échange de surface pour l'oxygène k est égal respectivement à $5,5.10^{-8}$ cm.s$^{-1}$ et à $1,7.10^{-8}$ cm.s$^{-1}$ à 500°C, et respectivement à $5,5.10^{-6}$ cm.s$^{-1}$ et à $1,7.10^{-6}$ cm.s$^{-1}$ à 900°C. Leur coefficient de diffusion de l'oxygène est égal respectivement à $3,2.10^{-9}$ et $5,2.10^{-9}$ cm$^2$.s$^{-1}$ à 500 °C et à $3,5.10^{-7}$ et $2,5.10^{-7}$ cm$^2$.s$^{-1}$ à 900°C. Le pourcentage de cations Ni$^{3+}$ à 700°C, déterminé par ATG (analyse thermogravimétrique sous air), est égal respectivement à 35% et à 28%. La variation de stoechiométrie en oxygène dans ce domaine de température, auquel appartient la température de fonctionnement d'un électrolyseur, est faible et n'a pas d'influence sur le coefficient de dilatation thermique qui reste constant et égal à $12,7.10^{-6}$ K$^{-1}$.

On dispose aussi d'un matériau $Nd_2NiO_4$ ayant respectivement des valeurs de x, y et z égales à 0. Ce matériau est synthétisé indifféremment par réaction à l'état solide des oxydes $La_2O_3$ et NiO à 1100 °C ou par des voies de chimie douce ou de sol-gel à partir par exemple de la décomposition des nitrates de lanthane et nickel en solution avec recuit final à 1100 °C. La valeur de la sur-stoechiométrie en oxygène est égale à $\delta$ = 0,22, déterminée par analyse chimique du Ni$^{3+}$ (iodométrie). La conductivité électronique $\sigma_e$ dudit matériau à 700°C est égale à 38 S.cm$^{-1}$, et son coefficient d'échange de surface pour l'oxygène k est égal $3.10^{-8}$ cm.s$^{-1}$ à 500°C et $1,8.10^{-6}$ cm.s$^{-1}$ à 900°C, et son coefficient de diffusion de l'oxygène est de $2,5.10^{-9}$ et $2.10^{-7}$ cm$^2$.s$^{-1}$ respectivement à 500°C et à 900°C.

On dispose aussi d'un matériau $La_2NiO_{4+\delta}$ ayant respectivement une valeur de x, y et z égales à 0. Ce matériau est synthétisé indifféremment par réaction à l'état solide des oxydes $La_2O_3$ et NiO à 1100 °C ou par des voies de chimie douce ou de sol-gel à partir par exemple de la décomposition des nitrates de lanthane et nickel en solution avec recuit final à 1100°C. La valeur de la sur-stoechiométrie en oxygène est égale à $\delta$ = 0,16 déterminée par analyse chimique du $Ni^{3+}$ (iodométrie). La conductivité électronique $\sigma_e$ dudit matériau à 700°C est égale à 50 $S.cm^{-1}$, et son coefficient d'échange de surface pour l'oxygène k est égal $5.10^{-7}$ $cm.s^{-1}$ à 500°C et $5.10^{-6}$ $cm.s^{-1}$ à 900°C, et son coefficient de diffusion de l'oxygène est de $4,5.10^{-9}$ et $2,2.10^{-7}$ $cm^2. s^{-1}$ respectivement à 500°C et à 900°C. Le pourcentage de cations $Ni^{3+}$ à 700°C, déterminé par ATG (analyse thermogravimétrique sous air), est égal à 26 %. Son coefficient de dilation thermique reste constant avec la température et est égal à 13,0. $10^{-6}$ $K^{-1}$.

Les propriétés électrochimiques de ces quatre matériaux ont été évaluées dans un montage à trois électrodes dans une demi-pile du type matériau d'électrode /YSZ/ matériau d'électrode, où la contre électrode et l'électrode de travail sont symétriques, déposées par peinture sur l'électrolyte et recuites à 1100°C pendant 2 heures. L'électrode de référence en platine est placée loin des deux autres électrodes. Le comportement de ce matériau a été analysé dans des conditions proches de celles d'une électrolyse de l'eau à haute température, c'est-à-dire sous courant et dans une gamme de température de 500 à 800°C.

La figure 1 est un graphe montrant, pour les quatre matériaux utilisés selon l'invention, le coefficient de diffusion d'oxygène D* ($cm^2.s^{-1}$) en fonction de 1000/T ($K^{-1}$), où T est la température. Chaque courbe est une droite. Les quatre matériaux selon l'invention sont $Nd_2NiO_{4+\delta}$, $La_2NiO_{4+\delta}$, $Nd_{1,95}NiO_{4+\delta}$ et $Nd_{1,90}NiO_{4+\delta}$. On voit que dans la plage de températures intéressante pour l'invention, les matériaux utilisés selon l'invention ont généralement, à l'erreur de mesure près, un coefficient D* élevé, et donc intéressant.

La figure 2 est un graphe montrant, pour les quatre matériaux utilisés selon l'invention, le coefficient d'échange de surface de l'oxygène, k ($cm.s^{-1}$) en fonction de 1000/T ($K^{-1}$), où T est la température. Chaque courbe est une droite. Les quatre matériaux selon l'invention sont $Nd_2NiO_{4+\delta}$, $La_2NiO_{4+\delta}$, $Nd_{1,95}NiO_{4+\delta}$ et $Nd_{1,90}NiO_{4+\delta}$. On voit que dans la plage de températures intéressante pour l'invention, les matériaux utilisés selon l'invention ont un coefficient k élevé, et donc intéressant.

## Revendications

1. Procédé d'électrolyse de l'eau comportant l'utilisation d'une électrode (4) comprenant au moins un matériau oxyde de formule générale suivante :

$$(1) \qquad A_{2-x-y}A'_xA''_yM_{1-z}M'_zO_{4+\delta},$$

où :

A est un cation métallique appartenant au groupe formé par les lanthanides et/ou les alcalins et/ou les alcalino-terreux,
A' est au moins un cation métallique appartenant au groupe formé par les lanthanides et/ou les alcalins et/ou les alcalino-terreux,
A'' est une lacune cationique, c'est-à-dire une vacance de cations A et/ou A',
M est un métal appartenant au groupe formé par les métaux des éléments de transition,
M' est au moins un métal appartenant au groupe formé par les métaux des éléments de transition,

ledit matériau étant tel que

```
0<y<0,30, de préférence 0<y<0,20 ;
```

```
0<δ<0,25, de façon préférée 0<δ<0,10.
```

```
0≤x≤1 ;
```

et

$$0 \leq z \leq 1.$$

2. Procédé selon la revendication précédente tel que :

A et A' sont indépendamment choisis dans le groupe formé par le lanthane La, le praséodyme Pr, le strontium Sr, le calcium Ca, et le néodyme Nd, de façon préférée le néodyme Nd, le strontium Sr et le calcium Ca, de façon encore plus préférée le néodyme Nd, et tel que :

M et M' sont indépendamment choisis dans le groupe formé par le chrome Cr, le manganèse Mn, le fer Fe, le cobalt Co, le nickel Ni et le cuivre Cu, de préférence le nickel Ni et le cuivre Cu, de façon encore plus préférée le nickel Ni.

3. Procédé selon l'une des revendications précédentes tel que :

A est choisi dans le groupe formé par le lanthane La, le praséodyme Pr et le néodyme Nd, de façon préférée le néodyme Nd, et
A' est choisi dans le groupe formé par le strontium Sr et le calcium Ca, de façon préférée le calcium Ca, et tel que :

M est choisi dans le groupe formé par le chrome Cr, le manganèse Mn, le fer Fe, le cobalt Co, le nickel Ni et le cuivre Cu, de préférence le nickel Ni, et
M' est choisi dans le groupe formé par le manganèse Mn, le fer Fe, le cuivre Cu ou le cobalt Co, de préférence le cuivre Cu ou le manganèse Mn.

4. Procédé selon l'une des revendications précédentes tel que ledit matériau a une structure cristallographique de type $K_2NiF_4$.

5. Procédé selon l'une des revendications précédentes tel que ledit matériau possède un coefficient d'échange de surface de l'oxygène, k, supérieur à $1.10^{-8}$ cm. $s^{-1}$ à 500°C et à $2.10^{-6}$ cm.$s^{-1}$ à 900 °C pour oxygène.

6. Procédé selon l'une des revendications précédentes tel que ledit matériau possède une conductivité électronique $\sigma_e$ au moins égale à 70 cm. $s^{-1}$, de préférence au moins égale à 80 cm. $s^{-1}$, de façon encore plus préférée supérieure à 90 cm. $s^{-1}$, à 700°C.

7. Procédé selon l'une des revendications précédentes tel que ledit matériau possède un coefficient de diffusion d'oxygène supérieur à $1.10^{-9}$ cm$^2$.$s^{-1}$ à 500°C et $1.10^{-7}$ cm$^2$. $s^{-1}$ à 900°C.

8. Procédé selon l'une des revendications précédentes tel que ledit matériau possède un coefficient d'échange de surface de l'oxygène, k, supérieur à $1.10^{-8}$ cm. $s^{-1}$ à 500°C et à $2.10^{-6}$ cm. $s^{-1}$ à 900°C pour l'oxygène, une conductivité électronique $\sigma_e$ au moins égale à 70 cm. $s^{-1}$, de préférence au moins égale à 80 cm. $s^{-1}$, de façon encore plus préférée supérieure à 90 cm. $s^{-1}$, à 700°C, et un coefficient de diffusion d'oxygène supérieur à $1.10^{-9}$ cm$^2$. $s^{-1}$ à 500°C et $1.10^{-7}$ cm$^2$.$s^{-1}$ à 900°C.

9. Procédé selon l'une des revendications précédentes tel que ledit procédé est mis en oeuvre à une température supérieure ou égale à 600°C.

10. Dispositif de type électrolyseur de l'eau comprenant au moins une cellule électrochimique comprenant un électrolyte solide (3), une cathode (2), et une anode (4) qui comprend au moins un matériau oxyde de formule générale suivante :

(1) $\qquad A_{2-x-y}A'_xA''_yM_{1-z}M'_zO_{4+\delta}$,

où :

A est un cation métallique appartenant au groupe formé par les lanthanides et/ou les alcalins et/ou les alcalino-terreux,
A' est au moins un cation métallique appartenant au groupe formé par les lanthanides et/ou les alcalins et/ou les alcalino-terreux,

A" est une lacune cationique, c'est-à-dire une vacance de cations A et/ou A',
M est un métal appartenant au groupe formé par les métaux des éléments de transition,
M' est au moins un métal appartenant au groupe formé par les métaux des éléments de transition, ledit matériau étant tel que

$$0 < y < 0,30, \text{ de préférence } 0 < y < 0,20 \text{ ;}$$

$$0 < \delta < 0,25, \text{ de façon encore plus préférée } 0 < \delta < 0,10 \text{ ;}$$

$$0 \leq x \leq 1 \text{ ;}$$

et

$$0 \leq z \leq 1.$$

**Patentansprüche**

1. Wasserelektrolyseverfahren, umfassend die Verwendung einer Elektrode (4), die mindestens ein Oxidmaterial der folgenden allgemeinen Formel umfasst:

$$(1) \qquad A_{2-x-y}A'_xA''_yM_{1-z}M'_zO_{4+\delta},$$

wobei

A ein Metallkation aus der von den Lanthaniden und/oder den Alkali- und/oder Erdalkalimetallen gebildeten Gruppe ist,
A' mindestens ein Metallkation aus der von den Lanthaniden und/oder den Alkali- und/oder Erdalkalimetallen gebildeten Gruppe ist,
A" eine Kationenlücke, d. h. eine Leerstelle der Kationen A und/oder A' ist,
M ein Metall aus der von den Übergangsmetallelementen gebildeten Gruppe ist,
M' mindestens ein Metall aus der von den Übergangsmetallelementen gebildeten Gruppe ist,

wobei das Material derart ist, dass

$$0 < y < 0,30, \text{ vorzugsweise } 0 < y < 0,20;$$

$$0 < \delta < 0,25, \text{ vorzugsweise } 0 < \delta < 0,10;$$

$$0 \leq x \leq 1$$

und

$$0 \leq z \leq 1.$$

2. Verfahren nach dem vorhergehenden Anspruch, wobei:

A und A' unabhängig aus der Gruppe ausgewählt sind, die von Lanthan La, Praseodym Pr, Strontium Sr, Calcium Ca und Neodym Nd, vorzugsweise von Neodym Nd, Strontium Sr und Calcium Ca, noch stärker bevorzugt von Neodym Nd gebildet wird, und wobei:

M und M' unabhängig der Gruppe ausgewählt sind, die von Chrom Cr, Mangan Mn, Eisen Fe, Kobalt Co, Nickel Ni und Kupfer Cu, vorzugsweise Nickel Ni und Kupfer Cu, noch stärker bevorzugt von Nickel Ni gebildet wird.

3. Verfahren nach einem der vorhergehenden Ansprüche, wobei:

A aus der Gruppe ausgewählt ist, die von Lanthan La, Praseodym Pr und Neodym Nd, vorzugsweise Neodym Nd gebildet wird, und

A' aus der Gruppe ausgewählt ist, die von Strontium Sr und Calcium Ca, vorzugsweise von Calcium Ca gebildet wird, und wobei:

M aus der Gruppe ausgewählt ist, die von Chrom Cr, Mangan Mn, Eisen Fe, Kobalt Co, Nickel Ni, Kupfer Cu, vorzugsweise Nickel Ni gebildet wird, und

M' aus der Gruppe ausgewählt ist, die von Mangan Mn, Eisen Fe, Kupfer Cu oder Kobalt Co, vorzugsweise Kupfer Cu oder Mangan Mn gebildet wird.

4. Verfahren nach einem der vorhergehenden Ansprüche, wobei das Material eine Kristallstruktur des Typs $K_2NiF_4$ besitzt.

5. Verfahren nach einem der vorhergehenden Ansprüche, wobei das Material einen Oberflächenaustauschkoeffizienten für Sauerstoff, k, von mehr als $1.10^{-8}$ cm.s$^{-1}$ bei 500°C und mehr als $2.10^{-6}$ cm.s$^{-1}$ bei 900°C für Sauerstoff besitzt.

6. Verfahren nach einem der vorhergehenden Ansprüche, wobei das Material eine Elektronenleitfähigkeit $\sigma_e$ von mindestens gleich 70 cm.s$^{-1}$, vorzugsweise mindestens gleich 80 cm.s$^{-1}$, noch stärker bevorzugt mehr als 90 cm.s$^{-1}$ bei 700°C besitzt.

7. Verfahren nach einem der vorhergehenden Ansprüche, wobei das Material einen Sauerstoffdiffusionskoeffizienten von mehr als $1.10^{-9}$ cm$^2$.s$^{-1}$ bei 500°C und $1.10^{-7}$ cm$^2$.s$^{-1}$ bei 900°C aufweist.

8. Verfahren nach einem der vorhergehenden Ansprüche, wobei das Material einen Oberflächenaustauschkoeffizienten für Sauerstoff, k, von mehr als $1.10^{-8}$ cm.s$^{-1}$ bei 500°C und mehr als $2.10^{-6}$ cm.s$^{-1}$ bei 900°C für Sauerstoff, eine Elektronenleitfähigkeit $\sigma_e$ von mindestens gleich 70 cm.s$^{-1}$, vorzugsweise mindestens gleich 80 cm.s$^{-1}$, noch stärker bevorzugt mehr als 90 cm.s$^{-1}$ bei 700°C und einen Sauerstoffdiffusionskoeffizienten von mehr als $1.10^{-9}$ cm$^2$.s$^{-1}$ bei 500°C und $1.10^{-7}$ cm$^2$.s$^{-1}$ bei 900°C aufweist.

9. Verfahren nach einem der vorhergehenden Ansprüche, wobei das Verfahren bei einer Temperatur von über oder gleich 600°C durchgeführt wird.

10. Vorrichtung des Typs einer Wasserelektrolysezelle, umfassend mindestens eine elektrochemische Zelle, die einen Festelektrolyten (3), eine Kathode (2) und eine Anode (4) umfasst, die mindestens ein Oxidmaterial der folgenden allgemeinen Formel umfasst:

(1)     $A_{2-x-y}A'_xA''_yM_{1-z}M'_zO_{4+\delta}$, wobei

A ein Metallkation aus der von den Lanthaniden und/oder den Alkali- und/oder Erdalkalimetallen gebildeten Gruppe ist,

A' mindestens ein Metallkation aus der von den Lanthaniden und/oder den Alkali- und/oder Erdalkalimetallen gebildeten Gruppe ist,

A'' eine Kationenlücke, d. h. eine Leerstelle der Kationen A und/oder A' ist,

M ein Metall aus der von den Übergangsmetallelementen gebildeten Gruppe ist,

M' mindestens ein Metall aus der von den Übergangsmetallelementen gebildeten Gruppe ist, wobei das Material derart ist, dass

```
0<y<0,30, vorzugsweise 0<y<0,20;
```

$$0<\delta<0,25,\ \text{noch stärker bevorzugt}\ 0<\delta<0,10;$$

$$0\leq x\leq 1$$

und

$$0\leq z\leq 1.$$

## Claims

1. A process for electrolysis of water comprising the use of an electrode (4) comprising at least one oxide material of the following general formula:

   (1)      $A_{2-x-y}A'_xA''_yM_{1-z}M'_zO_{4+\delta}$, where:

   A is a metal cation belonging to the group formed by lanthanides and/or alkali metals and/or alkaline-earth metals;
   A' is at least one metal cation belonging to the group formed by lanthanides and/or alkali metals and/or alkaline-earth metals;
   A'' is a cationic vacancy, that is to say a cation A and/or cation A' vacancy;
   M is a metal belonging to the group formed by metals of transition elements;
   M' is at least one metal belonging to the group formed by metals of transition elements;

   said material being such that

   $$0 < y < 0.30,\ \text{preferably}\ 0 < y < 0.20;$$

   $$0 < \delta < 0.25,\ \text{preferably}\ 0 < \delta < 0.10;$$

   $$0 \leq x \leq 1;$$

   and

   $$0 \leq z \leq 1.$$

2. The process as claimed in the preceding claim, wherein:

   A and A' are chosen independently from the group formed by lanthanum La, praseodymium Pr, strontium Sr, calcium Ca and neodymium Nd, preferably neodymium Nd, strontium Sr and calcium Ca, even more preferably neodymium Nd, and wherein :

   M and M' are chosen independently from the group formed by chromium Cr, manganese Mn, iron Fe, cobalt Co, nickel Ni and copper Cu, preferably nickel Ni and copper Cu, even more preferably nickel Ni.

3. The process as claimed in one of the preceding claims, wherein:

   A is chosen from the group formed by lanthanum La, praseodymium Pr, and neodymium Nd, preferably neodymium Nd; and

A' is chosen from the group formed by strontium Sr and calcium Ca, preferably calcium Ca;

and wherein:

M is chosen from the group formed by chromium Cr, manganese Mn, iron Fe, cobalt Co, nickel Ni and copper Cu, preferably nickel Ni; and
M' is chosen from the group formed by manganese Mn, iron Fe, copper Cu or cobalt Co, preferably copper Cu or manganese Mn.

4. The process as claimed in one of the preceding claims, wherein said material has a crystallographic structure of the $K_2NiF_4$ type.

5. The process as claimed in one of the preceding claims, wherein said material possesses an oxygen surface exchange coefficient k greater than $1 \times 10^{-8}$ cm/s at 500°C and greater than $2 \times 10^{-6}$ cm/s at 900°C for oxygen.

6. The process as claimed in one of the preceding claims, wherein said material possesses an electronic conductivity $\sigma_e$ at least equal to 70 S/cm, preferably at least equal to 80 S/cm, even more preferably greater than 90 S/cm at 700°C.

7. The process as claimed in one of the preceding claims, wherein said material possesses an oxygen diffusion coefficient greater than $1 \times 10^{-9}$ cm$^2$/s at 500°C and greater than $1 \times 10^{-7}$ cm$^2$/s at 900°C.

8. The process as claimed in one of the preceding claims, wherein said material possesses an oxygen surface exchange coefficient k greater than $1 \times 10^{-8}$ cm/s at 500°C and greater than $2 \times 10^{-6}$ cm/s at 900°C for oxygen, an electronic conductivity $\sigma_e$ at least equal to 70 S/cm, preferably at least equal to 80 S/cm, even more preferably greater than 90 S/cm at 700°C and an oxygen diffusion coefficient greater than $1 \times 10^{-9}$ cm$^2$/s at 500°C and greater than $1 \times 10^{-7}$ cm$^2$/s at 900°C.

9. The process as claimed in one of the preceding claims, wherein said process is implemented at a temperature greater than or equal to 600°C.

10. A water electrolyzer type device comprising at least one electrochemical cell comprising a solid electrolyte (3), a cathode (2) and an anode (4), which comprises at least one oxide material of the following general formula:

(1)     $A_{2-x-y}A'_xA''_yM_{1-z}M'_zO_{4+\delta}$, where:

A is a metal cation belonging to the group formed by lanthanides and/or alkali metals and/or alkaline-earth metals;
A' is at least one metal cation belonging to the group formed by lanthanides and/or alkali metals and/or alkaline-earth metals;
A'' is a cationic vacancy, that is to say a cation A and/or cation A' vacancy;
M is a metal belonging to the group formed by metals of transition elements;
M' is at least one metal belonging to the group formed by metals of transition elements;

said material being such that

$$0 < y < 0.30, \text{ preferably } 0 < y < 0.20;$$

$$0 < \delta < 0.25, \text{ preferably } 0 < \delta < 0.10;$$

$$0 \leq x \leq 1;$$

and

$$0 \leq z \leq 1.$$

FIG. 1

FIG. 2

**FIG. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2695570

**Littérature non-brevet citée dans la description**

• **E. SCHOULER ; E. FERNANDEZ ; H. BERNARD.** Electrolyse de la vapeur d'eau à haute température. *RGE,* Mars 1982

• **B.G. HYDE ; S. ANDERSON.** Inorganic Crystal Structures. Wiley Interscience Publication, 1988, 30